# EUROPÄISCHE PATENTSCHRIFT

(11) **EP 1 596 039 B1**
(45) Veröffentlichungstag und Bekanntmachung des Hinweises auf die Patenterteilung: **25.03.2009**
(21) Anmeldenummer: 05010317.5
(22) Anmeldetag: 12.05.2005
(51) Int. Cl.: F01L 1/34, F16K 11/07

(54) **Ventil, insbesondere zur Steuerung einer Nockenwellenverstelleinrichtung für Kraftfahrzeuge**
Valve, in particular for controlling a vehicle camshaft phasing device
Valve, notamment pour commander un déphaseur d'arbre à cames de véhicule

(30) Priorität: 14.05.2004 DE 102004024132
(43) Veröffentlichungstag der Anmeldung: 16.11.2005
(73) Patentinhaber: hofer mechatronik GmbH, 72644 Oberboihingen (DE)
(72) Erfinder: Sluka, Gerold, 72622 Nürtingen (DE); Palesch, Edwin, 73252 Lenningen (DE); Heidl, Frank, 73547 Lorsch (DE); Schneider, Guido, 70734 Fellbach (DE); Stephan, Wolfgang, 73087 Bad Boll (DE)
(74) Vertreter: Cremer, Ulrike Theresia

(56) Entgegenhaltungen:
- EP-A2- 1 197 641
- DE-A1- 3 534 412
- DE-A1- 19 908 146
- DE-C1- 4 024 057
- GB-A- 2 156 951
- US-A- 5 657 725

## Beschreibung

Die Erfindung betrifft ein Ventil, insbesondere zur Steuerung einer Nockenwellenverstelleinrichtung für Kraftfahrzeuge, nach dem Oberbegriff des Anspruches 1.

Für Nockenwellenverstelleinrichtungen sind Ventile bekannt, mit denen der Zufluß von Druckmedium zu einem Rotor der Nockenwellenverstelleinrichtung gesteuert wird. Je nach Drehrichtung des Rotors relativ zu einem mit der Kurbelwelle verbundenen Stator wird das Druckmedium unterschiedlichen Arbeitsanschlüssen des Ventiles zugeführt. Hierzu wird ein Schieber in der entsprechenden Richtung innerhalb des Ventilgehäuses verschoben. Um das Druckmedium in der gewünschten Weise dem Ventil zuführen zu können, sind ihm entsprechende, die Durchflußrichtung des Druckmediums bestimmende Ventile vor- bzw. nachgeschaltet. Dadurch sind solche Nockenwellenverstelleinrichtungen aufwendig und teuer. Offenlegungsschrift GB 2156951 ein solches Ventil.

Der Erfindung liegt die Aufgabe zugrunde, das gattungsgemäße Ventil so auszubilden, daß es einen einfachen Aufbau hat, dennoch zuverlässig arbeitet und kostengünstig hergestellt werden kann.

Die Aufgabe wird beim gattungsgemäßen Ventil erfindungsgemäß mit den kennzeichnenden Merkmalen des Anspruches 1 gelöst.

Beim erfindungsgemäßen Ventil ist den Arbeitsanschlüssen jeweils ein Rückschlagventil zugeordnet, von denen wenigstens eines, vorzugsweise beide im Schieber vorgesehen sind. Dadurch sind keine zusätzlichen, den Zufluß des Druckmediums steuernde Einrichtungen erforderlich, so daß die Ventileinrichtungen, insbesondere zur Steuerung von Nockenwellenverstelleinrichtungen, kostengünstig hergestellt und montiert werden können. Die Rückschlagventile sind so vorgesehen, daß sie den Zufluß des Druckmediums vom Druckanschluß zum Arbeitsanschluß sperren. Lediglich ein Rückfluß des Druckmediums aus dem nicht mit Druckmedium beaufschlagten Bereich des jeweiligen Verbrauchers kann über das Rückschlagventil erfolgen.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsformen näher erläutert. Es zeigen
- Fig. 1: im Schnitt längs der Linie A-A in Fig. 4 eine erste Ausführungsform eines erfindungsgemäßen Ventils in einer Mittelstellung,
- Fig. 2 und Fig. 3: jeweils im Axialschnitt zwei unterschiedliche Stellungen des Schiebers des erfindungsgemäßen Ventils gemäß Fig. 1,
- Fig. 4: eine Stirnansicht des erfindungsgemäßen Ventils gemäß Fig. 1,
- Fig. 5: in Stirnansicht eine zweite Ausführungsform eines erfindungsgemäßen Ventils,
- Fig. 6 bis Fig. 8: jeweils in einem Schnitt längs der Linie A-A in Fig. 5 unterschiedliche Stellungen des Schiebers des erfindungsgemäßen Ventils gemäß Fig. 5,
- Fig. 9: in schematischer Darstellung eine Stirnansicht eines Rotors einer erfindungsgemäßen Nockenwellenverstelleinrichtung,
- Fig. 10: einen Schnitt längs der Linie A-A in Fig. 9.

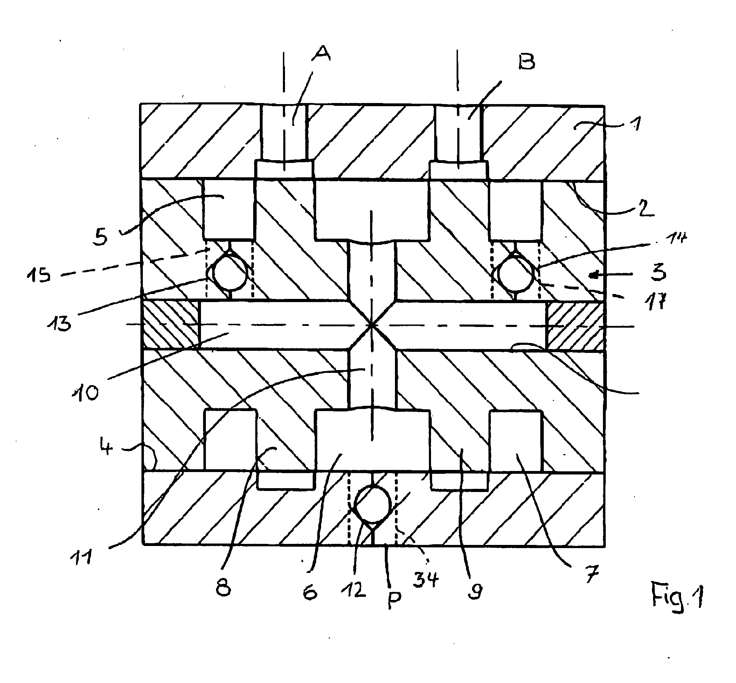

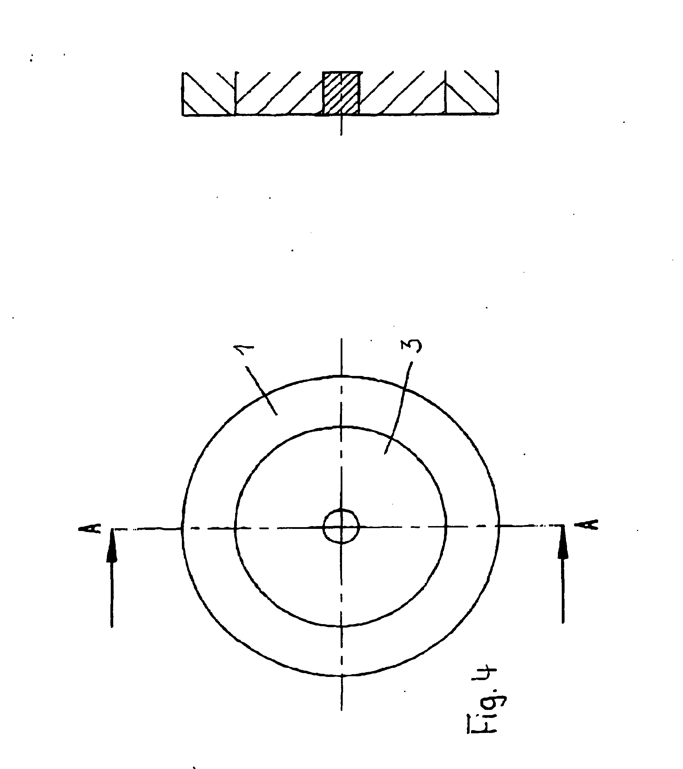

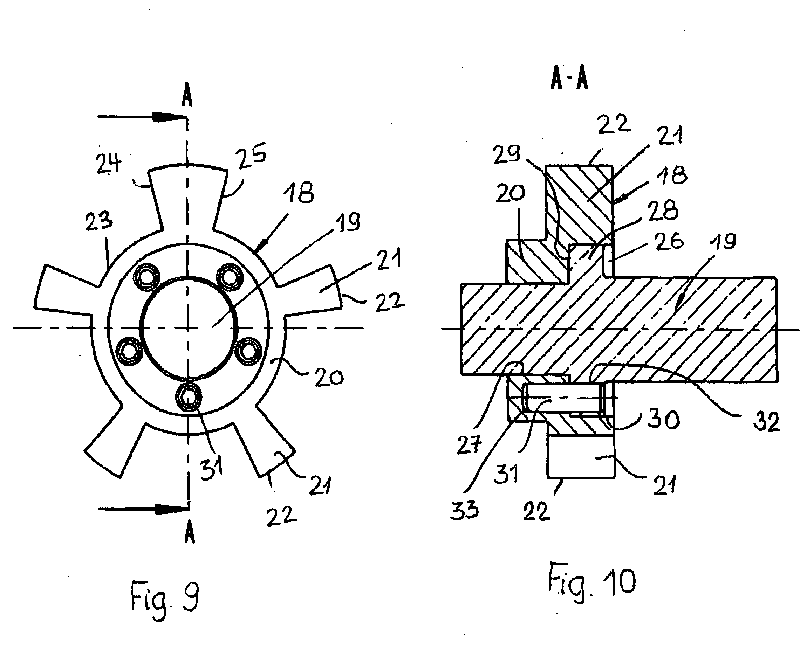

Das Ventil gemäß den Fig. 1 bis 4 wird vorteilhaft für Nockenwellenverstelleinrichtungen eingesetzt, wie sie in den Fig. 9 und 10 teilweise beispielhaft dargestellt sind. Das Ventil hat ein zylindrisches Gehäuse 1, in dessen zentraler Axialbohrung 2 ein Schieber 3 untergebracht ist. Die Bohrung 2 hat konstanten Durchmesser, so daß sie einfach im Gehäuse 1 angebracht werden kann.

Der Schieber 3 liegt mit seiner zylindrischen Mantelfläche 4 an der Wandung der Bohrung 2 an. In der Mantelfläche 4 sind mit axialem Abstand voneinander drei Ringnuten 5 bis 7 vorgesehen, von denen die beiden äußeren Ringnuten 5, 7 gleiche axiale Breite haben. Die mittlere Ringnut 6 ist axial breiter als die Nuten 5, 7. Vorteilhaft haben die Ringnuten 5 bis 7 gleiche Tiefe. Die Ringnuten 5 bis 7 sind durch Ringstege 8, 9 voneinander getrennt. Die beiden Ringstege 8, 9 haben gleiche axiale Breite und schließen in der in Fig. 1 dargestellten Mittelstellung des Schiebers 3 zwei Arbeitsanschlüsse A, B ab. Sie durchsetzen das Gehäuse radial. Den Arbeitsanschlüssen A, B gegenüberliegend befindet sich der Druckanschluß P.

Der Schieber 3 hat eine axiale, zentrische Bohrung 10, die den Schieber 3 durchsetzt und an beiden Enden geschlossen ist. Die Bohrung 10 ist durch wenigstens eine Radialbohrung 11, vorzugsweise durch mehrere Radialbohrungen mit dem Ringkanal 6 leitungsverbunden.

Der Druckanschluß P wird durch eine radiale, die Wandung des Gehäuses 1 durchsetzende Bohrung 34 gebildet, die in die Ringnut 6 des Schiebers 3 mündet und in der ein Rückschlagventil 12 sitzt, das in Richtung auf die Ringnut 6 des Schiebers 3 öffnet.

Im Bereich zwischen den Ringnuten 5, 7 und der Bohrung 10 sitzt im Schieber 3 jeweils ein Rückschlagventil 13, 14. Die beiden Rückschlagventile 13, 14 öffnen in Richtung auf die Bohrung 10 des Schiebers 3 und sind in jeweils einer Bohrung 15, 17 untergebracht, die den Schieber 3 radial durchsetzen und in den Boden der Ringnuten 5, 7 münden.

Der Schieber 3 des Ventils wird in bekannter Weise verschoben, beispielsweise durch Federn, Piezoelemente, Elektromagnete und dergleichen.

In der in Fig. 1 dargestellten Lage nimmt der Schieber 3 seine Mittelstellung ein, in der die Ringstege 8, 9 die Arbeitsanschlüsse A, B verschließen. Die Breite der Ringstege 8, 9 ist geringfügig größer als die Breite der Arbeitsanschlüsse A, B in der Wandung der Bohrung 2 des Gehäuses 1. In dieser Stellung kann das über den Druckanschluß P zugeführte Druckmedium über die Ringnut 6 und die Radialbohrung 11 in die Axialbohrung 10 des Schiebers 3 gelangen. Die Rückschlagventile 13, 14 verhindern, daß das Druckmedium in die Ringnuten 5, 7 gelangt.

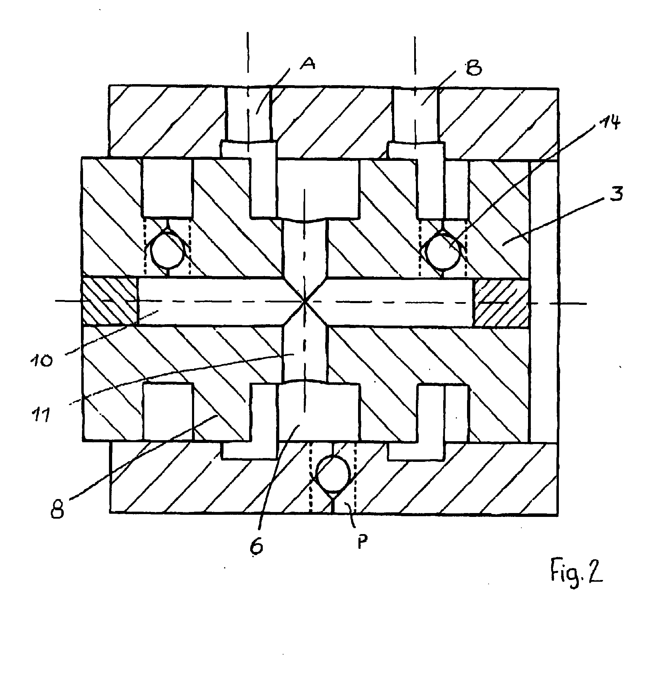

Soll der Arbeitsanschluß A mit Druckmedium versorgt werden, wird der Schieber 3 in Fig. 1 nach links verschoben (Fig. 2). Der Ringsteg 8 gibt nunmehr den Arbeitsanschluß A frei, so daß das über den Druckanschluß P zugeführte Druckmedium über die Ringnut 6, die Radialbohrung 11 und die Axialbohrung 10 zum Arbeitsanschluß A gelangen kann. Der Arbeitsanschluß B ist durch das Rückschlagventil 14 weiterhin gegen den Druckanschluß P gesperrt, so daß das Druckmedium nicht vom Druckanschluß P zum Arbeitsanschluß B gelangen kann. Der an den Arbeitsanschluß A angeschlossene Verbraucher kann nunmehr mit dem notwendigen Druckmedium versorgt werden. Das Druckmedium kann von dem an den Arbeitsanschluß B angeschlossenen Verbraucher über das Rückschlagventil 14 in die Bohrung 10 des Schiebers 3 zurückströmen.

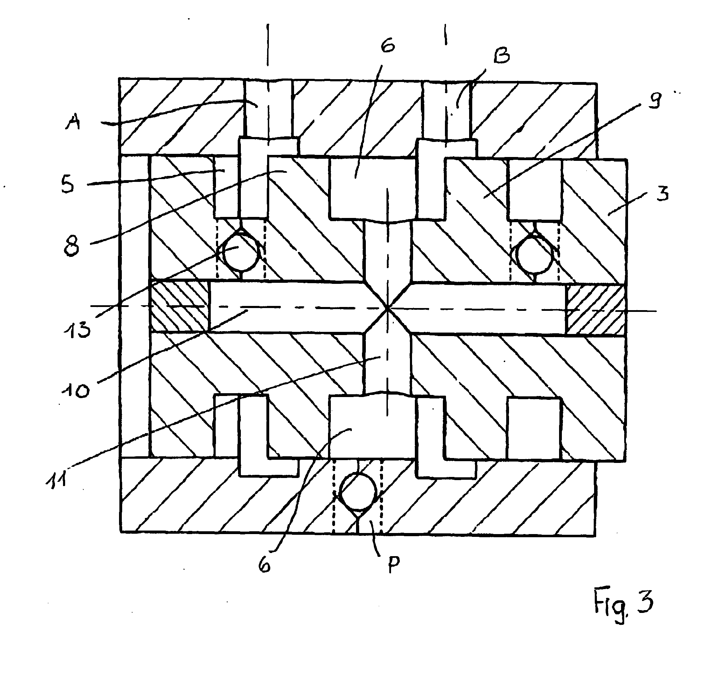

Soll der Arbeitsanschluß B mit Druckmedium versorgt werden, wird der Schieber 3 aus der Mittelstellung gemäß Fig. 1 nach rechts bis in die Stellung gemäß Fig. 3 verschoben. Der Ringsteg 9 gibt nunmehr den Arbeitsanschluß B frei, so daß das über den Druckanschluß P, die Ringnut 6 und die Bohrungen 10, 11 zugeführte Druckmedium zum Arbeitsanschluß B und von dort zum angeschlossenen Verbraucher strömen kann. Der Ringsteg 8 gibt auch den Arbeitsanschluß A frei, jedoch besteht keine Verbindung zwischen dem Arbeitsanschluß A und der Ringnut 6. Das Rückschlagventil 13 im Schieber 3 verhindert, daß das Druckmedium aus der axialen Bohrung 10 zum Arbeitsanschluß A strömen kann.

Über den Arbeitsanschluß A kann das unter Druck stehende Medium zum Druckanschluß P zurückgeführt werden. Das Rückschlagventil 13 öffnet unter dem Druck des Mediums, so daß es vom Arbeitsanschluß A in die Ringnut 5 und über die Bohrungen 10, 11 zur Ringnut 6 gelangen kann.

Dieses Ventil zeichnet sich durch eine konstruktiv einfache Ausbildung aus, da die Rückschlagventile 12 bis 14 im Gehäuse 1 sowie im Schieber 3 untergebracht sind. Eine weitere Vereinfachung kann dadurch erreicht werden, daß das Rückschlagventil 12 für den Druckanschluß P ebenfalls im Schieber 3 vorgesehen wird. So kann dieses Rückschlagventil 12 beispielsweise in der Radialbohrung 11 des Schiebers 13 untergebracht sein.

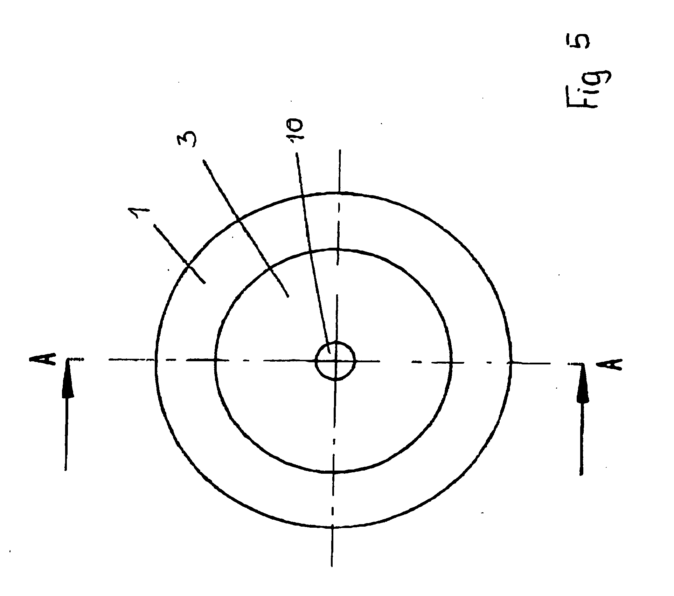

Während beim Ausführungsbeispiel nach den Fig. 1 bis 4 das Druckmedium über den Druckanschluß P radial zugeführt wird, erfolgt die Zuführung des Druckmediums beim Ventil gemäß den Fig. 5 bis 8 axial. Die axiale Bohrung 10 des Schiebers 3 ist endseitig offen, so daß das Druckmedium über diese Bohrung 10 vom Druckanschluß P axial unter Druck zugeführt werden kann. Der Schieber 3 hat wie beim vorigen Ausführungsbeispiel die Ringnuten 5 bis 7, die durch die Ringstege 8, 9 voneinander getrennt sind. Die den Arbeitsanschlüssen A, B zugeordneten Rückschlagventile 13, 14 sind in den Ringstegen 8, 9 untergebracht. Das Rückschlagventil 12 befindet sich in Höhe der Ringnut 6 im Bereich zwischen ihr und der Bohrung 10 innerhalb des Schiebers 3. Das Rückschlagventil 13 ist im Ringsteg 8 so angeordnet, daß es in Richtung auf die Ringnut 5 schließt. Dementsprechend ist das Rückschlagventil 14 im Ringsteg 9 so angeordnet, daß es in Richtung auf die Ringnut 7 schließt. Das Rückschlagventil 12 öffnet in Richtung auf die Ringnut 6.

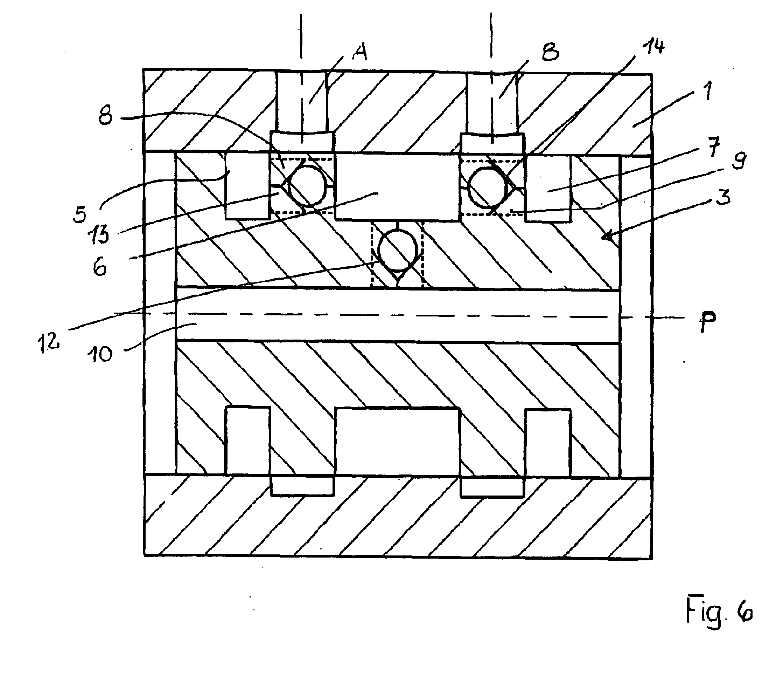

In der Stellung gemäß Fig. 6 befindet sich der Schieber 3 in seiner Mittelstellung, in der die beiden Arbeitsanschlüsse A, B durch die Ringstege 8, 9 geschlossen sind. Somit kann das über die Bohrung 10 und das Rückschlagventil 12 in die Ringnut 6 strömende Druckmedium nicht zu den Arbeitsanschlüssen A, B gelangen.

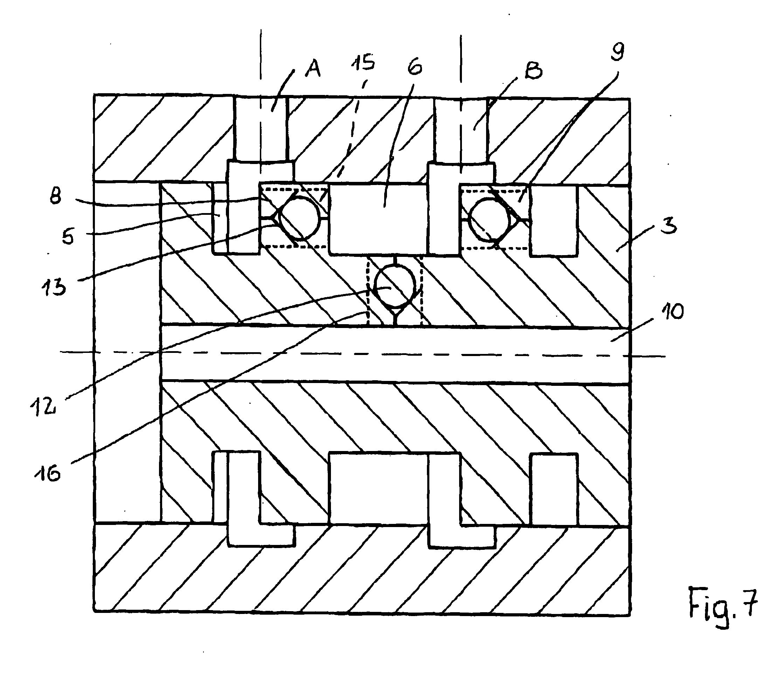

Soll der an den Arbeitsanschluß B angeschlossene Verbraucher mit Druckmedium versorgt werden, wird der Schieber 3 aus der Mittelstellung gemäß Fig. 6 nach rechts in die in Fig. 7 dargestellte Lage verschoben. Die beiden Ringstege 8, 9 geben die Arbeitsanschlüsse A, B teilweise frei. Das im Ringsteg 8 sitzende Rückschlagventil 13 verschließt eine den Ringsteg 8 axial durchsetzende Bohrung 15 in Richtung auf die Ringnut 5. Dadurch kann das in der Ringnut 6 befindliche Druckmedium nicht durch die Bohrung 15 des Ringsteges 8 in die Ringnut 5 und damit zum Arbeitsanschluß A strömen. Der Arbeitsanschluß B hingegen ist direkt mit der Ringnut 6 verbunden, so daß das Druckmedium über die axiale Bohrung 10 in eine Radialbohrung 16 strömen kann, in der sich das Rückschlagventil 12 befindet. Die Radialbohrung liegt im Bereich zwischen den beiden Ringstegen 8, 9 und verbindet die Axialbohrung 10 mit der mittleren Ringnut 6 des Schiebers 3. Das Rückschlagventil 12 öffnet in Richtung auf die Ringnut 6, so daß das Druckmedium, das axial über die Bohrung 10 zugeführt wird, über die Radialbohrung 16 und die Ringnut 6 zum Arbeitsanschluß B strömen kann. Der an den Arbeitsanschluß B angeschlossene Verbraucher wird mit dem Druckmedium versorgt.

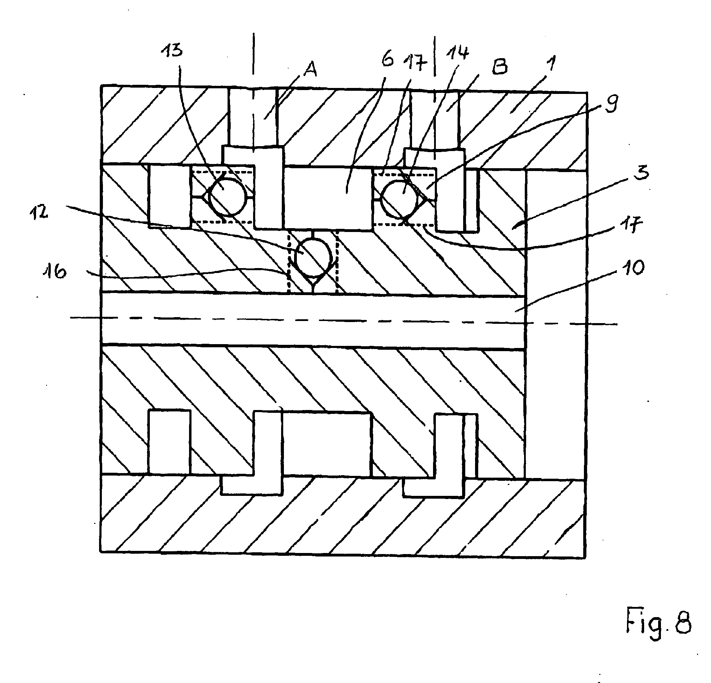

Soll der an den Arbeitsanschluß A angeschlossene Verbraucher mit dem Druckmedium versorgt werden, wird der Schieber 3 aus der Mittelstellung gemäß Fig. 6 nach links in die Stellung gemäß Fig. 8 verschoben. Beide Arbeitsanschlüsse A, B werden teilweise freigegeben. Die mittlere Ringnut 6 des Schiebers 3 ist jedoch lediglich mit dem Arbeitsanschluß A verbunden, während der Arbeitsanschluß B durch den Ringsteg 9 des Schiebers 3 von der mittleren Ringnut 6 getrennt ist. Das axial über die Axialbohrung 10 des Schiebers 3 zugeführte Druckmedium strömt somit über die Radialbohrung 16 und das darin befindliche Rückschlagventil 12 in die Ringnut 6 und von dort zum geöffneten Arbeitsanschluß A. Aus der Ringnut 6 kann das Druckmedium nicht zum Arbeitsanschluß B strömen, da das Rückschlagventil 14 in der Axialbohrung 17 des Ringsteges 9 durch das Rückschlagventil 14 in Richtung auf den Anschluß B geschlossen ist.

Bei dieser Ausführungsform sind alle drei Rückschlagventile 12 bis 14 im Schieber 3 untergebracht, so daß sich dieses Ventil durch eine sehr einfache konstruktive Gestaltung auszeichnet. Im Unterschied zur vorigen Ausführungsform ist der Schieber 3 kürzer als das Gehäuse 1. Dafür ragt der Schieber 3 in seinen beiden Endstellungen gemäß den Fig. 7 und 8 nicht axial über das Gehäuse 1.

Die beiden beschriebenen Ventile werden vorteilhaft für Nockenwellenversteller eingesetzt, die einen Rotor 18 aufweisen (Fig. 9 und 10), der drehfest auf einer Nockenwelle 19 sitzt. Der Rotor 18 hat einen zylindrischen Grundkörper 20, von dem in Abständen radial Flügel 21 abstehen, die mit gekrümmten Stirnseiten 22 an einer zylindrischen Innenfläche eines (nicht dargestellten) Stators dichtend anliegen. Dieser Stator hat über seinen Umfang verteilt radial nach innen gerichtete Flügel, die ihrerseits mit gekrümmten Stirnseiten an der zylindrischen Mantelfläche 23 des Grundkörpers 20 dichtend anliegen. Benachbarte Flügel des Stators begrenzen jeweils einen Druckraum, der durch die Flügel 21 des Rotors 18 jeweils in zwei Druckkammern unterteilt wird. Beide Kammern können mit dem Druckmedium gefüllt werden, wodurch je nach Druckbeaufschlagung der Flügel 21 des Rotors 18 der Rotor 18 gegenüber dem Stator in der jeweiligen Richtung gedreht wird. Der Rotor 18 kann maximal so weit um seine Achse gegenüber dem Stator gedreht werden, bis die Flügel 21 des Rotors 18 mit ihren Seitenflächen 24, 25 an den Seitenflächen der Flügel des Stators anliegen. Der Stator ist über ein Antriebsrad, das beispielsweise ein Ketten- oder Riemenrad sein kann, mit der Kurbelwelle des Verbrennungsmotors des Kraftfahrzeuges drehfest verbunden.

Der Rotor 18 hat eine stirnseitige Vertiefung 26 (Fig. 10), die zentrisch eine Durchgangsöffnung 27 für die Nockenwelle 19 aufweist. Die Nockenwelle 19 weist einen radialen Flansch 28 auf, der am radialen Boden 29 der Vertiefung 26 anliegt. Der Flansch 28 liegt außerdem mit seiner Mantelfläche an der zylindrischen Wandung 30 der Vertiefung 26 an. Die Nockenwelle 19 ragt durch die Durchgangsöffnung 27 des Rotors 18, der in diesem Bereich auf der Nockenwelle 19 aufliegt. Zur drehfesten Verbindung der Nockenwelle 19 mit dem Rotor 18 dienen Spannstifte 31, die über den Umfang des Flansches 28 der Nockenwelle 19 verteilt angeordnet sind. Zur Aufnahme der Spannstifte 31 ist der Flansch 28 mit Aufnahmeöffnungen 32 versehen, Im Boden 29 der Vertiefung 26 des Rotors 18 sind Sacklochbohrungen 33 vorgesehen, in die die Spannstifte 31 eingebracht werden. Vorteilhaft sind die Spannstifte 31 sowie die Aufnahmeöffnungen 32 und die Sacklochbohrungen 33 so bemessen, daß die Spannstifte 31 in der Einbaulage nicht über den Flansch 28 ragen. Seine Dicke ist vorteilhaft geringer als die Tiefe der Vertiefung 26, so daß der Flansch 28 und gegebenenfalls die Spannstifte 31 nicht aus der Vertiefung 26 ragen. Aufgrund der Verwendung von Spannstiften 31 müssen die Aufnahmeöffnungen 32 und die Sacklochbohrungen 33 nicht mit hoher Genauigkeit hergestellt werden. Die Herstellung des Nockenwellenverstellers wird dadurch erheblich vereinfacht und verbilligt.

Aufgrund der beschriebenen Verbindung mittels der Spannstifte 31 kann die Nockenwelle 19 einteilig ausgebildet sein. Dadurch können alle Lager auf einem Bauteil vorgesehen sein, so daß Fluchtungsprobleme, wie sie bei mehrteiligen Bauteilen auftreten, nicht zu befürchten sind.

Der Nockenwellenversteller kann mit dem Ventil gemäß den Fig. 1 bis 4 bzw. 5 bis 8 betätigt werden. Die einen Druckkammern sind an den Arbeitsanschluß A und die anderen Druckkammern an den Arbeitsanschluß B des Ventils angeschlossen. Somit kann das Druckmedium zur Verstellung des Rotors 18 relativ zum Stator über den Arbeitsanschluß A bzw. B in die jeweilige Druckkammer gelangen, um die Flügel 21 des Rotors 18 in der gewünschten Richtung zu beaufschlagen,

## Patentansprüche

1. Ventil, insbesondere zur Steuerung einer Nockenwellenverstelleinrichtung für Kraftfahrzeuge, mit einem Gehäuse, in dem ein Schieber (3) untergebracht ist, und mit wenigstens zwei Arbeitsanschlüssen (A, B), die über den Schieber (3) mit einem Druckanschluss (P) verbindbar sind und wobei den Arbeitsanschlüssen (A, B) jeweils wenigstens ein Rückschlagventil zugeordnet ist und von den Rückschlagventilen (13, 14) wenigstens eines im Schieber (3) angeordnet ist, **dadurch gekennzeichnet, dass** die Rückschlagventile (13, 14) den Zufluss eines Druckmediums vom Druckanschluss (P) zum Arbeitsanschluss (A, B) sperren und die Rückschlagventile (13, 14) jeweils in eine Ringnut (5, 7) in einer Mantelfläche (4) des Schiebers (3) münden.

2. Ventil nach Anspruch 1,
**dadurch gekennzeichnet, dass** die Rückschlagventile (13, 14) für die Arbeitsanschlüsse (A, B) in Bohrungen (15, 17) des Schiebers (3) untergebracht sind.

3. Ventil nach Anspruch 1 oder 2,
**dadurch gekennzeichnet, dass** benachbarte Ringnuten (5 bis 7) durch Ringstege (8, 9) des Schiebers (3) voneinander getrennt sind.

4. Ventil nach Anspruch 2 oder 3,
**dadurch gekennzeichnet, dass** die Bohrungen (15, 17) in den Boden der Ringnuten (5, 7) münden.

5. Ventil nach einem der vorhergehenden Ansprüche,
**dadurch gekennzeichnet, dass** der Schieber (3) eine axiale Bohrung (10) aufweist.

6. Ventil nach Anspruch 5,
**dadurch gekennzeichnet, dass** die axiale Bohrung (10) durch die Bohrungen (15, 17) mit den Ringnuten (5, 7) verbunden ist.

7. Ventil nach einem der vorhergehenden Ansprüche,
**dadurch gekennzeichnet, dass** dem Druckanschluss (P) ein Rückschlagventil (12) zugeordnet ist, das am Gehäuse (1) angeordnet ist.

8. Ventil nach Anspruch 7,
**dadurch gekennzeichnet, dass** das dem Druckanschluss (P) zugeordnete Rückschlagventil (12) in einer das Gehäuse (1) radial durchsetzenden Bohrung (34) untergebracht ist.

9. Ventil nach Anspruch 8,
**dadurch gekennzeichnet, dass** die Bohrung (34) in eine Ringnut (6) des Schiebers (3) mündet.

10. Ventil nach Anspruch 9,
**dadurch gekennzeichnet, dass** die Ringnut (6) über wenigstens eine den Schieber (3) durchsetzende Bohrung (11) mit der axialen Bohrung (10) des Schiebers (3) leitungsverbunden ist.

11. Ventil nach einem der Ansprüche 5 bis 10,
**dadurch gekennzeichnet, dass** die axiale Bohrung (10) des Schiebers (3) an beiden Enden geschlossen ist.

12. Ventil nach einem der Ansprüche 1 bis 3,
**dadurch gekennzeichnet, dass** die Bohrungen (15, 17) der Rückschlagventile (13, 14) für die Arbeitsanschlüsse (A, B) in den Ringstegen (8, 9) des Schiebers (3) vorgesehen sind.

13. Ventil nach Anspruch 12,
**dadurch gekennzeichnet, dass** die Bohrungen (15,17) die Ringstege (8, 9) axial durchsetzen.

14. Ventil nach Anspruch 12 oder 13,
**dadurch gekennzeichnet, dass** das dem Druckanschluss (P) zugeordnete Rückschlagventil (12) im Schieber (3) vorgesehen ist.

15. Ventil nach Anspruch 14,
**dadurch gekennzeichnet, dass** das dem Druckanschluss (P) zugeordnete Rückschlagventil (12) in einer den Schieber (3) radial durchsetzenden Bohrung (16) untergebracht ist.

16. Ventil nach Anspruch 15,
**dadurch gekennzeichnet, dass** die radiale Bohrung (16) die axiale Bohrung (10) mit der zwischen den Ringstegen (8, 9) liegenden Ringnut (6) des Schiebers (3) verbindet.

## Claims

1. Valve, in particular for controlling a camshaft adjusting device for motor vehicles, having a housing, in which a slide (3) is accommodated, and having at least two working ports (A, B), which are connectable by the slide (3) to a pressure port (P), and wherein associated with the working ports (A, B) there is in each case at least one non-return valve and at least one of the non-return valves (13, 14) is disposed in the slide (3),
**characterized in that** the non-return valves (13, 14) block the inflow of a pressure medium from the pressure port (P) to the working port (A, B) and the non-return valves (13, 14) open out in each case into an annular groove (5, 7) in a lateral surface (4) of the slide (3).

2. Valve according to claim 1,
**characterized in that** the non-return valves (13, 14) for the working ports (A, B) are accommodated in bores (15, 17) of the slide (3).

3. Valve according to claim 1 or 2,
**characterized in that** adjacent annular grooves (5 to 7) are separated from one another by ring lands (8, 9) of the slide (3).

4. Valve according to claim 2 or 3,
**characterized in that** the bores (15, 17) open out into the base of the annular grooves (5, 7).

5. Valve according to one of the preceding claims,
**characterized in that** the slide (3) has an axial bore (10).

6. Valve according to claim 5,
**characterized in that** the axial bore (10) is connected by the bores (15, 17) to the annular grooves (5, 7).

7. Valve according to one of the preceding claims,
**characterized in that** associated with the pressure port (P) is a non-return valve (12), which is disposed on the housing (1).

8. Valve according to claim 7,
**characterized in that** the non-return valve (12) associated with the pressure port (P) is accommodated in a bore (34) that radially penetrates the housing (1).

9. Valve according to claim 8,
**characterized in that** the bore (34) opens out into an annular groove (6) of the slide (3).

10. Valve according to claim 9,
**characterized in that** the annular groove (6) is line-connected to the axial bore (10) of the slide (3) by at least one bore (11) that penetrates the slide (3).

11. Valve according to one of claims 5 to 10,
**characterized in that** the axial bore (10) of the slide (3) is closed at both ends.

12. Valve according to one of claims 1 to 3,
**characterized in that** the bores (15, 17) of the non-return valves (13, 14) for the working ports (A, B) are provided in the ring lands (8, 9) of the slide (3).

13. Valve according to claim 12,
**characterized in that** the bores (15, 17) axially penetrate the ring lands (8, 9).

14. Valve according to claim 12 or 13,
**characterized in that** the non-return valve (12) associated with the pressure port (P) is provided in the slide (3).

15. Valve according to claim 14,
**characterized in that** the non-return valve (12) associated with the pressure port (P) is accommodated in a bore (16) that radially penetrates the slide (3).

16. Valve according to claim 15,
**characterized in that** the radial bore (16) connects the axial bore (10) to the annular groove (6) of the slide (3) that lies between the ring lands (8, 9).

## Revendications

1. Valve, notamment pour commander un déphaseur d'arbre à cames de véhicule, avec un carter dans lequel est disposé un coulisseau (3), et avec au moins deux raccords de travail (A, B) pouvant être reliés à un raccord de pression (P) par l'intermédiaire du coulisseau (3) et les raccords de travail (A, B) étant respectivement associés à au moins une valve antiretour et au moins une des valves antiretour (13, 14) étant disposée dans le coulisseau (3), **caractérisée en ce que** les valves antiretour (13, 14) bloquent l'afflux d'un agent sous pression circulant du raccord de pression (P) au raccord de travail (A, B) et les valves antiretour (13, 14) débouchant respectivement dans une rainure annulaire (5, 7) située dans une surface de chemise (4) du coulisseau (3).

2. Valve selon la revendication 1, **caractérisée en ce que** les valves antiretour (13, 14) des raccords de travail (A, B) sont disposées dans les alésages (15, 17) du coulisseau (3).

3. Valve selon la revendication 1 ou 2, **caractérisée en ce que** les rainures annulaires (5 à 7) connexes sont séparées entre elles par les entretoises annulaires (8, 9) du coulisseau (3).

4. Valve selon la revendication 2 ou 3, **caractérisée en ce que** les alésages (15, 17) débouchent dans le fond des rainures annulaires (5, 7).

5. Valve selon l'une quelconque des revendications précédentes, **caractérisée en ce que** le coulisseau (3) présente un alésage axial (10).

6. Valve selon la revendication 5, **caractérisée en ce que** l'alésage axial (10) est relié aux rainures annulaires (5, 7) par l'intermédiaire des alésages (15, 17).

7. Valve selon l'une quelconque des revendications précédentes, **caractérisée en ce qu'**une valve antiretour (12) disposée au niveau du carter (1) est associée au raccord de pression (P).

8. Valve selon la revendication 7, **caractérisée en ce que** la valve antiretour (12) associée au raccord de pression (P) est disposée dans un alésage (34) traversant le carter (1) dans le plan radial.

9. Valve selon la revendication 8, **caractérisée en ce que** l'alésage (34) débouche dans une rainure annulaire (6) du coulisseau (3).

10. Valve selon La revendication 9, **caractérisée en ce que** La rainure annulaire (6) est reliée par l'intermédiaire de conduites à l'alésage axial (10) du coulisseau (3), par l'intermédiaire d'au moins un alésage (11) traversant le coulisseau (3).

11. Valve selon l'une quelconque des revendications 5 à 10, **caractérisée en ce que** l'alésage axial (10) du coulisseau (3) est fermé au niveau des deux extrémités.

12. Valve selon l'une quelconque des revendications 1 à 3, **caractérisée en ce que** les alésages (15, 17) des valves antiretour (13, 14) sont prévus pour les raccords de travail (A, B) dans les entretoises annulaires (8, 9) du coulisseau (3).

13. Valve selon la revendication 12, **caractérisée en ce que** les alésages (15, 17) traversent les entretoises annulaires (8, 9) dans le plan axial.

14. Valve selon La revendication 12 ou 13, **caractérisée en ce que** La valve antiretour (12) associée au raccord de pression (P) est prévue dans le coulisseau (3).

15. Valve selon la revendication 14, **caractérisée en ce que** la valve antiretour (12) associée au raccord de pression (P) est disposée dans un alésage (16) traversant le coulisseau (3) dans le plan radial.

16. Valve selon La revendication 15, **caractérisée en ce que** l'alésage radial (16) relie l'alésage axial (10) à la rainure annulaire (6) du coulisseau (3) reposant entre les entretoises annulaires (8, 9).
